# EUROPÄISCHE PATENTSCHRIFT

(11) **EP 3 520 936 B1**
(45) Veröffentlichungstag und Bekanntmachung des Hinweises auf die Patenterteilung: **16.09.2020**
(21) Anmeldenummer: 18155222.5
(22) Anmeldetag: 06.02.2018
(51) Int. Cl.: B26D 3/28

(54) **KLINGE FÜR ABISOLIER- UND SCHNEIDWERKZEUG**
BLADE FOR STRIPPING AND CUTTING TOOL
LAME POUR OUTIL DE DÉNUDAGE ET DE COUPE

(43) Veröffentlichungstag der Anmeldung: 07.08.2019
(73) Patentinhaber: Georg Fischer Rohrleitungssysteme AG, 8201 Schaffhausen (CH)
(72) Erfinder: Raible, Moritz, 88662 Überlingen (DE)
(74) Vertreter: Fenner, Seraina

(56) Entgegenhaltungen:
- EP-A1- 1 787 743
- EP-A1- 3 213 890
- JP-A- H0 679 501

## Beschreibung

Die Erfindung betrifft eine Klinge für ein Abisolier- und Schälwerkzeug zum Abisolieren und Schälen eines vorisolierten Rohres beinhaltend einen Grundkörper, wobei der Grundkörper als längliche, dünne Platte ausgebildet ist, wobei die Platte konvex ausgebildet ist und sich der Scheitelpunkt der konvexen Krümmung entlang der Länge der Platte erstreckt, wobei an einer Längskante der Platte bzw. des Grundkörpers eine Schneide angeordnet ist, die dem Lösen der Isolationsschicht vom Innenrohr dient und eine Einsatzklinge.

Aus dem Stand der Technik sind hauptsächlich Schälgeräte für Mantelaussenflächen von Rohren bekannt um die äussere oxidierte Schichten abzuschälen, um optimale Verschweissungen mit einem Fitting durchführen zu können. Damit die Verschweissung den geforderten Anforderungen stand hält und da diese nur erzielbar sind wenn die Mantelaussenfläche keine Verunreinigungen und keine Oxidschicht aufweist, ist es wichtig die äusserste Schicht zu entfernen. Die JP 6-79501 offenbart ein solches Schälwerkzeug um die Aussenmantelfläche eines Rohres abzuschälen.

Aus dem Stand der Technik sind auch Abmantelgeräte bekannt zur Abmantelung eines mit einer Schutzschicht versehenen Metallrohres. Die EP 1 118 405 A1 offenbart ein solches Gerät.

Beide oben erwähnten Vorrichtungen eignen sich jedoch nicht zum Abisolieren und Schälen eines vorisolierten Rohres, welches in der Regel eine etwas dickere Schaumstoffisolation beinhaltet, die es vom Innenrohr abzutrennen gilt und anschliessend die äussere Mantelrohrfläche des Innenrohres noch derart zu überarbeiten, dass die Oberfläche sich für eine Schweissung eignet.
Solche vorisolierten Rohrleitungen werden dort eingesetzt wo es eine gute Isolation des Mediums gegenüber den Umgebungsbedingungen benötigt, bspw. für den Transport von Kälteträgermedien in Kühlsystemen. Um das Medium transportierende Innenrohr bzw. das Mediumsrohr vorzugsweise aus Kunststoff ist eine Isolationsschicht vorzugweise aus geschäumtem Kunststoff angeordnet, wobei die Isolationsschicht von einer Aussenhaut oder einem Aussenrohr umgeben ist, welche vorzugsweise aus Kunststoff aber auch aus einem Metall gebildet sind und dem Schutz der Isolationsschicht dient. Solche Rohrleitungen müssen an ihren Enden abisoliert und das Mediumsrohr an der äusseren Mantelfläche geschält werden um mit Fittings oder weiteren Rohren verbunden werden zu können, da die Verbindung über das Mediumsrohr erfolgt um die Dichtheit zu gewährleisten.

Die EP 3 213 890 A1 offenbart ein Werkzeug gemäß des Oberbegriffs des Anspruch 1, mit welchem ein Abisolieren und Schälen eines vorisolierten Rohres möglich ist. Die verwendete Klinge ermöglicht sowohl das Abisolieren durch Abtrennen der Isolationsschicht, wie auch das Schälen der Aussenmantelfläche des Innenrohres.
Nachteilig an der oben erwähnten Ausführungsform ist jedoch, dass die Klinge bzw. die daran angeordneten Schneiden starr ausgerichtet sind und sich der äusseren Mantelfläche des Innenrohres nicht anpassen können.

Es ist Aufgabe der Erfindung eine Klinge vorzuschlagen, welche sich für das Abisolieren und Schälen von vorisolierten Rohrenden eignet und eine optimale Schälung der äusseren Mantelfläche gewährleistet sowie einen wirtschaftlich optimalen Prozess ermöglicht mittels dem Vorgang effizient durchgeführt werden kann.

Diese Aufgabe wird erfindungsgemäss dadurch gelöst, dass die Einsatzklinge als separates Teil ausgebildet ist und die Klinge eine Achse beinhaltet, wobei die Achse der Lagerung der Einsatzklinge im Grundkörper dient und vorzugsweise durch die Einsatzklinge hindurchragt, wobei die Einsatzklinge eine Schneide aufweist und die Einsatzklinge derart im Grundkörper angeordnet ist, dass die Schneide der Einsatzklinge parallel zur Schneide am Grundkörper verläuft.

Die erfindungsgemässe Klinge zur Abisolierung und Schälung eines vorisolierten Rohres beinhaltet einen Grundkörper, wobei der Grundkörper als längliche, dünne Platte ausgebildet ist. Die Platte hat über die komplette Länge eine konvexe Ausgestaltung, das heisst die Platte weist an ihrer Innenseite, welche zum Innenrohr hin ausgerichtet ist, eine Krümmung auf vorzugsweise einen Radius wie auch an der Aussenseite, wobei die beiden Krümmungen vorzugsweise Radien vorzugsweise konzentrisch verlaufen. Durch die konvexe Ausgestaltung der Platte erstreckt sich der Scheitelpunkt der Krümmung vorzugsweise Radius entlang der Länge der Platte bzw. des Grundköpers. An der Längskante des Grundkörpers bzw. der Platte ist eine Schneide angeordnet, wobei die Schneide dem Lösen der Isolationsschicht vom Innenrohr dient. Zum Lösen der Isolationsschicht, wird die Klinge auf die eine Seite rotiert bzw. in die eine Drehrichtung und das anschliessende Schälen wird vorzugsweise mittels einer Rotation in die Gegenrichtung durchgeführt, wobei das Schälen auch während der Rotation bzw. dem Lösen der Isolationsschicht erfolgen kann.
Die Klinge beinhaltet eine Einsatzklinge, welche als separates Teil ausgebildet ist und im Grundkörper angeordnet ist. Die Einsatzklinge ist mittels einer Achse, welche durch die Einsatzklinge hindurch ragt, im Grundkörper gelagert, wodurch die Einsatzklinge die Möglichkeit hat sich nach oben und nach unten zu bewegen und links und rechts vom Grundkörper geführt ist.
Die an der Einsatzklinge angeordnete Schneide ist parallel zur Schneide am Grundkörper ausgerichtet, wobei sie in die entgegengesetzte oder dieselbe Richtung wie die Schneide am Grundkörper ausgerichtet ist. Durch die gegengleiche bzw. entgegengesetzte Ausrichtung der beiden Schneiden zueinander wird erreicht, dass das Lösen der Isolationsschicht vom Innenrohr während dem Hineindrehen der Klinge in die eine Drehrichtung erfolgt, das heisst mit oder gegen den Uhrzeigersinn, und das anschliessende Schälen erfolgt dann während dem Herausdrehen der Klinge und in die entgegengesetzte Dreh- bzw. Rotationsrichtung. Wenn die Schneiden an der Klinge bzw. am Grundkörper und an der Einsatzklinge hingegen in dieselbe Richtung ausgerichtet sind, erfolgt die Schälung des Innenrohres während des Lösens der Isolationsschicht also auch während des Hineindrehens der Klinge. In beiden Fällen können dadurch unnötige Bewegungsvorgänge während des Prozesses vermieden werden, wodurch der Vorgang effizient durchgeführt werden kann.

Vorzugsweise weist der Grundkörper eine Aussparung auf in der die Einsatzklinge angeordnet ist. Durch das Anordnen der Einsatzklinge in der Aussparung ist die Einsatzklinge optimal geführt und ausgerichtet.

Vorteilhaft ist es, dass die Aussparung im Grundkörper durchgehend ausgebildet ist und vollständig vom Grundkörper umschlossen ist. Das heisst die Aussparung durchdringt den Grundkörper bzw. die Platte vollständig und ist auf allen Seiten vom Grundkörper umgeben, so dass der Grundkörper die Aussparung umrahmt. Dies bringt den Vorteil mit sich, dass der Grundkörper in sich stabil ist und keine Nasen oder Ecken aufweist, die separat abstehen und sich mit der Isolationsschicht verhaken.

Gemäss einer bevorzugten Ausführungsform weist die Klinge ein Federelement auf, welches dem Anpressen der Einsatzklinge dient. Da die Einsatzklinge auf der Achse gelagert ist, hat die Einsatzklinge die Möglichkeit sich nach unten und oben zu bewegen um sich der äusseren Mantelfläche des Innenrohres anzupassen. Um nun eine gewisse Vorspannung auf die Einsatzklinge auszuüben bzw. eine Kraft um eine Schälung der äusseren Mantelfläche zu erreichen, drückt das Federelement die Einsatzklinge hinunter bzw. an das Innenrohr. Die Isolationsschicht welche oberhalb der Klinge verläuft übt ebenso eine Anpresskraft auf die Klinge aus die dem Schälvorgang dient.

Die Erfindung zeichnet sich auch dadurch aus, dass der Grundkörper eine Dicke von nur 1 - 4 mm, speziell bevorzugt von 1.5 - 3 mm, aufweist, dadurch wird das Einstechen in die Isolationsschicht ermöglicht. Zudem ist es vorteilhaft, wenn der Grundkörper an den beiden Längsseiten und vorzugsweise an der Stirnseite eine Schräge aufweist. Die Schrägen an der Längsseite ermöglichen der Isolation ein besseres Gleiten über die Klinge und die Schräge an der Stirnseite verringern den Widerstand beim Einstechen in die Isolationsschicht.

Als vorteilhaft hat sich gezeigt, wenn die Schneide am Grundkörper sich über die komplette Länge des Grundkörpers erstreckt, dies ermöglicht ein einfaches Abtrennen der Isolationsschicht vom Innenrohr.

Vorzugsweise weist die Einsatzklinge eine Abstufung der Dicke bzw. von unterschiedlichen Höhen über die Länge der Einsatzklinge auf. Die Innenfläche der Einsatzklinge ist dem zu schälenden Innenrohr zugewandt und weist unterschiedliche Höhen auf. Dies dient dazu, dass die Schneide mit der äusseren Mantelfläche in Kontakt kommt auch wenn der hintere Bereich bzw. der Ausnahmebereich der Einsatzklinge beim Schälvorgang zuerst über die noch nicht geschälte äussere Mantelfläche fährt, die noch einen grösseren Durchmesser aufweist als der schlussendlich geschälte Durchmesser hat. Durch die Höhenunterschiede ist gewährleistet, dass die Schneide bzw. der Schälbereich der Einsatzklinge trotzdem genügend tief in die Mantelfläche eingreifen kann um Material abzutragen, da die Schneide höher ausgebildet ist als der hintere Bereich der Klinge der als Ausnahmebereich dient und erst an der äusseren Mantelfläche anliegt wenn kein tieferes Schälen mehr erwünscht ist. Vorzugsweise überragt der Schälbereich den Ausnahmebereich zwischen 0.2 - 0.8 mm, speziell bevorzugt 0.2 - 0.5 mm. In der Höhe an der Innenfläche der Einsatzklinge.

Vorteilhaft ist es, wenn die Einsatzklinge unterschiedliche Bereiche an der Innenfläche aufweist, die vorzugsweise unterschiedliche Höhen aufweisen. Die Bereiche dienen, wie zuvor erwähnt, einem unterschiedlichen Zweck. Die Einsatzklinge weist zum einen einen Schälbereich auf an dem die Schneide angeordnet ist und zum anderen mindestens einen Ausnahmebereich, der hinter dem Schälbereich angeordnet ist. In der Höhe überragt der Schälbereich bzw. die Schneide den Ausnahmebereich um eine Schälung sicherzustellen.

Es hat sich als vorteilhaft gezeigt, wenn ein Auflagebereich an der Einsatzklinge angeordnet ist, der vorzugsweise vor dem Schälbereich bzw. vor der Schneide angeordnet ist. Das heisst, dass die Einsatzklinge vorzugsweise im vorderen Bereich einen Auflagebereich zur Abstützung der Einsatzklinge am Ende des Schälvorgangs bzw. des Herausdrehens der Klinge aufweist. Dadurch wird vermieden, dass die Schneide sich am Rohrende in die Mantelfläche eingräbt, sondern die Schälung vielmehr gerade ausläuft.

Eine bevorzugte Ausführung besteht darin, dass die Schneide am Grundkörper und die Schneide an der Einsatzklinge parallel zur Rohrachse des abzusiolierenden Rohres verläuft, dies ermöglicht eine einfache Abisolierung und Schälung mit einem Werkzeug in einer Aufspannung.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine dreidimensionale Ansicht einer erfindungsgemässen Klinge, wobei die Klinge in ein entsprechendes Abisolier- und Schälwerkzeug eingebaut ist,
Fig. 2 eine Seitenansicht einer erfindungsgemässen Klinge, wobei die Klinge in ein entsprechendes Abisolier- und Schälwerkzeug eingebaut ist,
Fig. 3 einen Längsschnitt durch eine im Grundkörper eingesetzte Einsatzklinge,
Fig. 4 eine dreidimensionale Ansicht einer erfindungsgemässen Klinge,
Fig. 5 einen Querschnitt durch eine im Grundkörper eingesetzte Einsatzklinge und
Fig. 6 zwei dreidimensionale Ansichten einer Einsatzklinge.

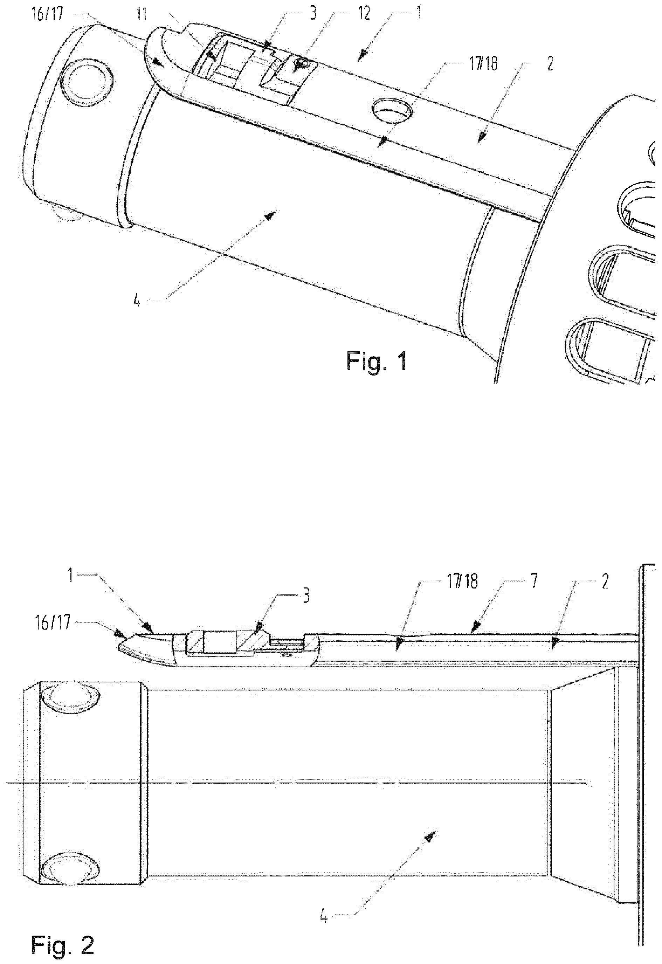

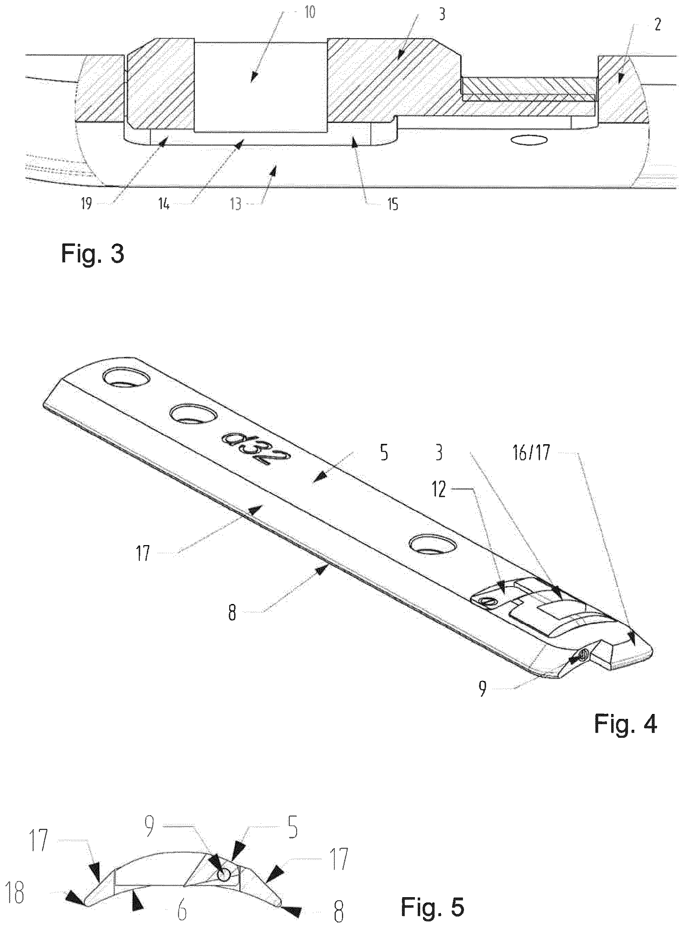

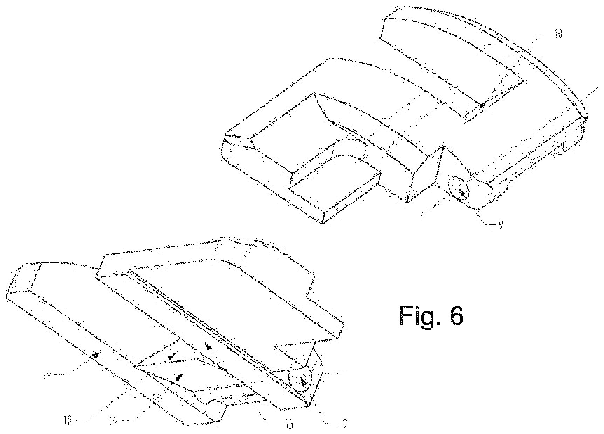

Die in den Figuren 1-6 dargestellte Ausführungsform zeigt eine Klinge 1 bei der die Schneiden 8, 10 gegeneinander ausgerichtet sind. Selbstverständlich sind die Ausführungen auch auf eine Klinge 1 mit gleichgerichteten Schneiden 8, 10 anzuwenden. Die in Fig. 1 dargestellte Zeichnung zeigt die erfindungsgemässe Klinge 1 in einem entsprechenden Werkzeug zur Abiolierung und Schälung von vorisolierten Rohrleitungen. Auf den Aufnahmedorn 4 wird das abzuisolierende Rohrende aufgesteckt und die erfindungsgemässe Klinge 1 wird dann durch eine Rotationsbewegung in die Isolationsschicht der vorisolierten Rohrleitung eingedreht. Die hier gezeigten Fig. 1 und 2 zeigen die Klinge 1 in der Position in der sie komplett in das Rohr eingetaucht ist, wobei hier das Rohr nicht dargestellt ist um die Klinge gut sichtbar zu zeigen. Zu Beginn des Prozesses ragt die Klinge 1 noch nicht über den Aufnahmedorn 4 hinaus sondern steigt langsam über die Rotationsbewegung in die dargestellte Position an. Die Klinge 1 beinhaltet einen Grundkörper 2 der vorzugsweise aus einem metallischen Werkstoff hergestellt ist. Der Grundkörper 2 weist eine Gestalt als längliche, dünne Platte auf, die eine konvexe Krümmung aufweist. Die konvexe Krümmung an der Aussenseite 5 ist gut in den Fig. 4 und 5 erkennbar. Die Krümmung 5, welche vorzugsweise als Radius ausgebildet ist, bringt den Vorteil mit sich, dass die abgetrennte Isolationsschicht leicht über die Klinge 1 gleitet während sie weiter in die Isolationsschicht eindringt wie auch beim Herausdrehen der Klinge 1 während des Schälvorgangs. Wie bereits erwähnt, wird in der alternativen Ausführungsform mit den gleichgerichteten Schneiden 8, 10, der Schälvorgang ebenfalls während des Hineindrehens durchgeführt.
An der Innenseite des Grundkörpers 2 ist ebenfalls eine konvexe Krümmung 6 angeordnet, die ebenfalls vorzugsweise als Radius ausgebildet ist, wodurch sich die Klinge 1 bzw. der Grundkörper 2 gut an der äusseren Mantelfläche des Innenrohres anlegt und so eine gute Abisolation wie auch Schälung erfolgen kann.
Der Scheitelpunkt 7 der konvexen Krümmung 5 verläuft parallel der Länge des Grundkörpers 2 bzw. der Platte. An der einen Längskante des Grundkörpers 2 erstreckt sich eine Schneide 8, die dem Abisolieren bzw. dem Lösen der Isolationsschicht von der äusseren Mantelfläche des Innenrohres (nicht dargestellt) dient. Vorzugsweise erstreckt sich die Schneide 8 über die komplette Länge des Grundkörpers 2.
Die Klinge 1 beinhaltet eine Einsatzklinge 3, wobei diese als separates Teil ausgebildet ist, was gut in Fig. 6 erkennbar ist. Mittels einer Achse 9 ist die Einsatzklinge 3 im Grundkörper 2 angeordnet bzw. gelagert. Die Achse 9 ragt durch die Einsatzklinge 3 hindurch und ermöglicht dadurch der Einsatzklinge 3 eine Schwenkbewegung nach unten und oben um sich gut an die äussere Mantelfläche des Innenrohrs während des Schälvorgangs anzupassen. Die Einsatzklinge 3 weist eine Schneide 10 auf, die dem Schälen der äusseren Mantelfläche des Innenrohres dient. Die Einsatzklinge 3 ist derart im Grundkörper 2 angeordnet, dass die Schneide 10 der Einsatzklinge 3 parallel zur Schneide 8 am Grundkörper 3 verläuft und die Schneide 10 der Einsatzklinge 3 in entgegengesetzte oder dieselbe Richtung der Schneide 8 am Grundkörper 2 ausgerichtet ist. Die sich entgegengesetzt angeordneten Schneiden 8, 10 rühren daher, dass das Abisolieren bzw. das Abtrennen der Isolationsschicht vom Innenrohr in die eine Rotationsrichtung erfolgt und das anschliessende Schälen in die andere Rotationsrichtung, wodurch die Klinge 1 wieder aus dem Rohr hinausgeschraubt wird. Bei gleichgerichteten Schneiden 8, 10 erfolgt das Schälen während des Abisolierens als während demselben Rotationsvorgang, demzufolge dem Hineindrehen.

Der Grundkörper 2 weist eine Aussparung 11 auf in der die Einsatzklinge 3 angeordnet ist. Die Aussparung 11 ist durchgehend ausgebildet damit die darin angeordnete Einsatzklinge 3 hindurchragt und die äussere Mantelfläche des Innenrohres kontaktieren kann. Zudem ist in der abgebildeten Ausführung die Aussparung 11 komplett vom Grundkörper 2 umgeben, das heisst sie ist auf keiner Seite offen und somit vollständig vom Grundkörper 2 umrahmt, wodurch der komplette Grundkörper 2 eine gute Stabilität und Steifigkeit aufweist wie auch keine abstehenden Elemente die sich mit der Isolation verhaken könnten.
Um eine gute Schälung des Innenrohres zu gewährleisten, wird die Einsatzklinge 3 vorzugsweise mittels eines Federelements 12 zusätzlich hinuntergedrückt, neben dem dass die Isolationsschicht ebenfalls auf die Einsatzklinge 3 drückt während sie während des Schälvorgangs beim Herausdrehen der Klinge über den Grundkörper 2 gleitet.
Die Schräge 17, welche entlang der Längskanten 8, 18 wie auch an der Stirnseite des Grundkörpers 16 verläuft, ermöglicht der Klinge 1 ein einfacheres Einstechen in die Isolationsschicht, da der Widerstand dadurch reduziert wird, wie auch der Abisolations- und Schälvorgang aufgrund der Schräge 17 ein einfaches Übergleiten der Isolationsschicht über die Klinge 1 ermöglicht.
Die Einsatzklinge 3 weist an ihrer Innenfläche 13, welche dem zu schälenden Innenrohr zugewandt ist eine Höhenabstufung auf, diese ist gut in Fig. 3 zu erkennen. Bei der Schneide 10 ist der Schälbereich höher ausgebildet als der dahinter liegende Ausnahmebereich 15 oder auch der davor liegende Auflagebereich 19. Da das Innenrohr während des Herausdrehens der Klinge 1 geschält wird, befindet sich der Ausnahmebereich 15 jeweils über dem ungeschälten Rohr, welches somit einen grösseren Aussendurchmesser aufweist. Damit ein Eingreifen der Einsatzklinge 3 mit der Schneide 10 im Schälbereich 14 gewährleistet ist, weist der Ausnahmebereich 15 eine geringere Höhe auf als der Schälbereich 13. Vorzugsweise weist die Einsatzklinge 3 vor dem Schälbereich 13 einen Auflagebereich 19 auf, der verhindert dass der Schälbereich 14 bzw. die Schneide 10 sich am Ende des Rohres in das Rohr eingräbt da keine Auflagemöglichkeit durch den Ausnahmebereich 15 mehr besteht da dieser sich schon ausserhalbe des Rohres befindet.
In Fig. 5 ist gut ersichtlich wie die Einsatzklinge 3 auf der Achse 9 im Grundkörper 2 gelagert ist. Vorzugsweise weist der Grundköper 2 einen Anschlag auf der die Drehbewegung der Einsatzklinge 3 nach unten begrenzt, wobei der Anschlag in den Figuren nicht dargestellt ist.

### Bezugszeichenliste

- 1: Klinge
- 2: Grundkörper
- 3: Einsatzklinge
- 4: Aufnahmedorn für Rohrende
- 5: Krümmung konvexe Aussenseite
- 6: Krümmung konvexe Innenseite
- 7: Scheitelpunkt
- 8: Längskante Grundkörper / Schneide
- 9: Achse
- 10: Schneide Einsatzklinge
- 11: Aussparung im Grundkörper
- 12: Federelement
- 13: Innenseite Einsatzklinge
- 14: Schälbereich Einsatzklinge
- 15: Ausnahmebereich Einsatzklinge
- 16: Stirnseite Grundkörper
- 17: Schräge
- 18: Längskante Grundkörper ohne Schneide
- 19: Auflagebereich

## Patentansprüche

1. Klinge (1) für ein Abisolier- und Schälwerkzeug zum Abisolieren und Schälen eines vorisolierten Rohres beinhaltend einen Grundkörper (2), wobei der Grundkörper (2) als längliche, dünne Platte ausgebildet ist, wobei die Platte konvex ausgebildet ist und sich der Scheitelpunkt (7) der konvexen Krümmung (5) entlang der Länge der Platte erstreckt, wobei an einer Längskante (8) der Platte bzw. des Grundkörpers (2) eine Schneide (8) angeordnet ist, die dem Lösen einer Isolationsschicht von einem Innenrohr dient und eine Einsatzklinge (3) **dadurch gekennzeichnet, dass** die Einsatzklinge (3) als separates Teil ausgebildet ist und die Klinge (1) eine Achse (9) beinhaltet, wobei die Achse (9) der Lagerung der Einsatzklinge (3) im Grundkörper (2) dient, wobei die Achse (9) parallel zur Rohrachse verläuft und vorzugsweise durch die Einsatzklinge (3) hindurchragt, wobei die Einsatzklinge (3) eine Schneide (10) aufweist und die Einsatzklinge (3) derart im Grundkörper (2) angeordnet ist, dass die Schneide (10) der Einsatzklinge (3) parallel zur Schneide (8) am Grundkörper (2) verläuft.

2. Klinge (1) nach Anspruch 1 **dadurch gekennzeichnet, dass** die Schneide (10) der Einsatzklinge (3) in die entgegengesetzte oder dieselbe Richtung zur Schneide (8) am Grundkörper (2) ausgerichtet ist.

3. Klinge (1) nach einem der Ansprüche 1 oder 2, **dadurch gekennzeichnet, dass** der Grundkörper (2) eine Aussparung (11) aufweist in der die Einsatzklinge (3) angeordnet ist.

4. Klinge (1) nach einem der vorangehenden Ansprüche, **dadurch gekennzeichnet, dass** der Grundkörper (2) eine Aussparung (11) aufweist, wobei die Aussparung (11) durchgehend ausgebildet ist und vollständig vom Grundkörper (2) umschlossen ist.

5. Klinge (1) nach einem der vorangehenden Ansprüche, **dadurch gekennzeichnet, dass** die Klinge (1) ein Federelement (12) aufweist, welches dem Anpressen der Einsatzklinge (3) dient.

6. Klinge (1) nach einem der vorangehenden Ansprüche, **dadurch gekennzeichnet, dass** der Grundkörper (2) eine Dicke von 1 - 4 mm, vorzugsweise 1.5 - 3 mm hat.

7. Klinge (1) nach einem der vorangehenden Ansprüche, **dadurch gekennzeichnet, dass** die Schneide (8) am Grundkörper (2) sich über die komplette Länge des Grundkörpers (2) erstreckt.

8. Klinge (1) nach einem der vorangehenden Ansprüche, **dadurch gekennzeichnet, dass** die Einsatzklinge (3) an der Innenfläche (13), wobei die Innenfläche (13) dem zu schälenden Innenrohr zugewandt ist, eine Abstufung der Höhe über die Länge der Einsatzklinge (3) aufweist.

9. Klinge (1) nach einem der vorangehenden Ansprüche, **dadurch gekennzeichnet, dass** die Einsatzklinge (3) unterschiedliche Bereiche (14, 15, 19) an der Innenfläche (13) aufweist, die vorzugsweise unterschiedliche Höhen aufweisen.

10. Klinge (1) nach einem der vorangehenden Ansprüche, **dadurch gekennzeichnet, dass** die Einsatzklinge (3) einen Schälbereich (14) und mindestens einen Ausnahmebereich (15) aufweist, wobei die Bereiche (14, 15) hintereinander angeordnet sind.

11. Klinge (1) nach einem der vorangehenden Ansprüche, **dadurch gekennzeichnet, dass** die Schneide (8) am Grundkörper (2) und die Schneide (10) an der Einsatzkling (3) parallel zur Rohrachse des abzusiolierenden Rohres verläuft.

## Claims

1. Blade (1) for a stripping and peeling tool for stripping and peeling a pre-insulated pipe, including a main body (2), wherein the main body (2) is configured as an elongate thin plate, wherein the plate is configured so as to be convex and the apex (7) of the convex curvature (5) extends along the length of the plate, wherein a cutting edge (8) is disposed on a longitudinal edge (8) of the plate, or of the main body (2), respectively, said cutting edge (8) serving for releasing an insulation layer from an internal pipe, and an insert blade (3), **characterized in that** the insert blade (3) is configured as a separate part and the blade (1) includes an axle (9), wherein the axle (9) serves for mounting the insert blade (3) in the main body (2), wherein the axle (9) runs parallel to the pipe axis and preferably protrudes through the insert blade (3), wherein the insert blade (3) has a cutting edge (10) and the insert blade (3) is disposed in the main body (2) in such a manner that the cutting edge (10) of the insert blade (3) runs parallel to the cutting edge (8) on the main body (2) .

2. Blade (1) according to Claim 1, **characterized in that** the cutting edge (10) of the insert blade (3) is aligned in the opposite direction or the same direction as the cutting edge (8) on the main body (2).

3. Blade (1) according to one of Claims 1 or 2, **characterized in that** the main body (2) has a recess (11) in which the insert blade (3) is disposed.

4. Blade (1) according to one of the preceding claims, **characterized in that** the main body (2) has a recess (11), wherein the recess (11) is configured so as to be continuous and is completely enclosed by the main body (2).

5. Blade (1) according to one of the preceding claims, **characterized in that** the blade (1) has a spring element (12) which serves for pressing on the insert blade (3).

6. Blade (1) according to one of the preceding claims, **characterized in that** the main body (2) has a thickness of 1-4 mm, preferably 1.5-3 mm.

7. Blade (1) according to one of the preceding claims, **characterized in that** the cutting edge (8) on the main body (2) extends across the complete length of the main body (2).

8. Blade (1) according to one of the preceding claims, **characterized in that** the insert blade (3) on the internal face (13) has a gradation of the height across the length of the insert blade (3), wherein the internal face (13) faces the internal pipe to be peeled.

9. Blade (1) according to one of the preceding claims, **characterized in that** the insert blade (3) on the internal face (13) has dissimilar regions (14, 15, 19) which preferably have dissimilar heights.

10. Blade (1) according to one of the preceding claims, **characterized in that** the insert blade (3) has a peeling region (14) and at least one clearance region (15), wherein the regions (14, 15) are disposed behind one another.

11. Blade (1) according to one of the preceding claims, **characterized in that** the cutting edge (8) on the main body (2) and the cutting edge (10) on the insert blade (3) runs parallel to the pipe axis of the pipe to be stripped.

## Revendications

1. Lame (1) pour un outil de dénudage et de pelage pour le dénudage et le pelage d'un tuyau pré-isolé, contenant un corps de base (2), le corps de base (2) étant réalisé sous forme de plaque mince allongée, la plaque étant réalisée sous forme convexe et le sommet (7) de la courbure convexe (5) s'étendant le long de la longueur de la plaque, un tranchant (8) étant disposé au niveau d'une arête longitudinale (8) de la plaque ou du corps de base (2), lequel sert à détacher une couche d'isolation d'un tube intérieur, et une lame d'insertion (3), **caractérisée en ce que** la lame d'insertion (3) est réalisée sous forme de pièce séparée et la lame (1) contient un axe (9), l'axe (9) servant à supporter la lame d'insertion (3) dans le corps de base (2), l'axe (9) s'étendant parallèlement à l'axe du tube et pénétrant de préférence à travers la lame d'insertion (3), la lame d'insertion (3) présentant un tranchant (10) et la lame d'insertion (3) étant disposée dans le corps de base (2) de telle sorte que le tranchant (10) de la lame d'insertion (3) s'étende parallèlement au tranchant (8) au niveau du corps de base (2).

2. Lame (1) selon la revendication 1, **caractérisée en ce que** le tranchant (10) de la lame d'insertion (3) est orienté dans la direction opposée au tranchant (8) au niveau du corps de base (2) ou dans la même direction que celui-ci.

3. Lame (1) selon l'une quelconque des revendications 1 et 2, **caractérisée en ce que** le corps de base (2) présente un évidement (11) dans lequel est disposée la lame d'insertion (3).

4. Lame (1) selon l'une quelconque des revendications précédentes, **caractérisée en ce que** le corps de base (2) présente un évidement (11), l'évidement (11) étant réalisé sous forme continue et étant complètement entouré par le corps de base (2).

5. Lame (1) selon l'une quelconque des revendications précédentes, **caractérisée en ce que** la lame (1) présente un élément de ressort (12) qui sert à presser la lame d'insertion (3).

6. Lame (1) selon l'une quelconque des revendications précédentes, **caractérisée en ce que** le corps de base (2) présente une épaisseur de 1 à 4 mm, de préférence de 1,5 à 3 mm.

7. Lame (1) selon l'une quelconque des revendications précédentes, **caractérisée en ce que** le tranchant (8) au niveau du corps de base (2) s'étend sur toute la longueur du corps de base (2).

8. Lame (1) selon l'une quelconque des revendications précédentes, **caractérisée en ce que** la lame d'insertion (3) présente au niveau de la surface intérieure (13), la surface intérieure (13) étant tournée vers le tube intérieur à peler, un gradin de hauteur sur la longueur de la lame d'insertion (3).

9. Lame (1) selon l'une quelconque des revendications précédentes, **caractérisée en ce que** la lame d'insertion (3) présente différentes régions (14, 15, 19) au niveau de la surface intérieure (13), lesquelles présentent de préférence des hauteurs différentes.

10. Lame (1) selon l'une quelconque des revendications précédentes, **caractérisée en ce que** la lame d'insertion (3) présente une région de pelage (14) et au moins une région d'enlèvement (15), les régions (14, 15) étant disposées l'une derrière l'autre.

11. Lame (1) selon l'une quelconque des revendications précédentes, **caractérisée en ce que** le tranchant (8) au niveau du corps de base (2) et le tranchant (10) au niveau de la lame d'insertion (3) s'étendent parallèlement à l'axe de tube du tube à dénuder.
